# EUROPÄISCHE PATENTSCHRIFT

(11) **EP 3 371 487 B1**
(45) Veröffentlichungstag und Bekanntmachung des Hinweises auf die Patenterteilung: **07.04.2021**
(21) Anmeldenummer: 16809643.6
(22) Anmeldetag: 24.10.2016
(51) Int. Cl.: F16H 57/04, F16H 57/02

(54) **GETRIEBE MIT AUS EINEM UNTERTEIL UND EINEM OBERTEIL GEBILDETEN, TEILWEISE MIT ÖL BEFÜLLTEN GEHÄUSE UND MIT EINEM ZAHNRAD**
GEARBOX HAVING A HOUSING, WHICH IS FORMED FROM A LOWER PART AND AN UPPER PART AND IS PARTIALLY FILLED WITH OIL, AND HAVING A GEAR
TRANSMISSION COMPRENANT UN BOÎTIER COMPOSÉ D'UNE PARTIE INFÉRIEURE ET D'UNE PARTIE SUPÉRIEURE, PARTIELLEMENT EMPLI D'HUILE, ET UNE ROUE D'ENGRENAGE

(30) Priorität: 02.11.2015 DE 102015014062
(43) Veröffentlichungstag der Anmeldung: 12.09.2018
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2016/025123
(87) Internationale Veröffentlichungsnummer: WO 2017/076507

(56) Entgegenhaltungen:
- CA-A1- 2 922 535
- DE-A1-102010 010 816
- DE-C- 612 984
- SU-A1- 983 361
- US-A1- 2011 192 245

## Beschreibung

Die Erfindung betrifft ein Getriebe mit aus einem Unterteil und einem Oberteil gebildeten, teilweise mit Öl befüllten Gehäuse und mit einem Zahnrad.

Es ist allgemein bekannt, dass Getriebe jeweils ein Gehäuse und ein Zahnrad aufweisen.

Aus der CA 2 922 535 A1 ist als nächstliegender Stand der Technik ein Getriebe mit einem drehrichtungsunabhängigen Ölfördermechanismus bekannt.

Aus der DE 612 984 C ist eine Tauchschmierung für ein Zahnradgetriebe bekannt.

Aus der SU 983 361 A1 ist ebenfalls ein Zahnradgetriebe mit einem Ölfördermechanismus bekannt.

Aus der US 2011 / 192 245 A1 ist ein Getriebe mit einem Fördermechanismus für Öl bekannt.

Aus der DE 10 2010 010816 A1 ist ein Getriebe mit einem Verdrängungskörper zwischen Gehäuse des Getriebes und Funktionsteilen bekannt.

Der Erfindung liegt daher die Aufgabe zugrunde, das Getriebe mit geringeren Verlustleistungen auszubilden.

Erfindungsgemäß wird die Aufgabe bei dem Getriebe nach den in Anspruch 1 angegebenen Merkmalen gelöst.

Wichtige Merkmale der Erfindung bei dem Getriebe sind, dass es aus einem Unterteil und einem Oberteil gebildeten, teilweise mit Öl befüllten Gehäuse und mit einem Zahnrad vorgesehen ist,
**wobei** ein Ölführungsmittel am Unterteil befestigt ist, insbesondere schraubverbunden ist,
wobei zwischen dem Zahnrad und dem Ölführungsmittel ein Kanal angeordnet ist, in welchen eine Rohrleitung mündet,
wobei der Kanal vom Ölführungsmittel und vom Zahnrad begrenzt ist,
wobei das Ölführungsmittel die Rohrleitung bildet und/oder aufweist.

Von Vorteil ist dabei, dass Öl vom Unterteil zum Oberteil förderbar ist, also potentielle Energie dem Öl zuführbar ist, so, dass da Öl an Schmierstellen zuleitbar ist, die nicht im Ölsumpf und/oder unterhalb des Ölpegels angeordnet sind.

**Erfindungsgemäß** führt die Rohrleitung vom Ölsumpf des Getriebes zum Kanal. Von Vorteil ist dabei, dass ein Ansaugen des Öls aus dem Ölsumpf heraus ausführbar ist. Somit ist durch einen Unterdruck im Kanal Öl aus dem Ölsumpf ansaugbar. Dieser relative Unterdruck ist durch eine nicht verschwindende Strömungsgeschwindigkeit im Kanal erzeugbar. Dabei nimmt die Verzahnung des drehenden Zahnrads Öl mit und es bildet sich auf diese Weise eine Strömung im Kanal aus.

**Erfindungsgemäß** befindet sich der Olpegel innerhalb des Unterteils, also der Ölsumpf im Unterteil angeordnet ist. Von Vorteil ist dabei, dass im Oberteil Luft und somit möglichst wenig Masse im Getriebe vorhanden ist. Den zu schmierenden Stellen des oberhalb des Ölpegels liegenden Innenraumbereichs, wie Lager und/oder Eingriffsbereich, wird das durch den Kanal vom drehenden Zahnrad geförderte Öl zugeführt. Hierfür ist eine Sammelvorrichtung, also ein Mittel zum Sammeln des vertikal nach oben geschleuderten Öls sinnvoll. Das gesammelte Öl wird dann den zu schmierenden Stellen zugeführt.

Bei einer vorteilhaften Ausgestaltung tritt durch den Kanal gefördertes Öl vertikal aus dem Kanal aus, insbesondere so, dass das Oberteil mit Öl beaufschlagt wird. Von Vorteil ist dabei, dass das Öl sogar von der Innenseite des Oberteils heruntertropft und dabei aufsammelbar ist, beispielsweise durch eine Sammelrinne oder eine wannenförmige Sammelvorrichtung.

Erfindungsgemäss leitet ein Mittel zum Sammeln von aus dem Kanal ausgetretenem Öl das gesammelte Öl Schmierstellen, nämlich Lagern und/oder mindestens einem Verzahnungseingriffsbereich, zu. Von Vorteil ist dabei, dass das gesammelte Öl den Schmierstellen zuleitbar ist.

**Erfindungsgemäß** weist das Ölführungsmittel ein Zentralblech auf, das zwischen zwei Seitenblechen des Ölführungsmittels angeordnet ist,
wobei der Kanal begrenzt ist durch das Zahnrad, das Zentralblech und die beiden Seitenbleche,
insbesondere wobei das Zentralblech mit dem jeweiligen Seitenblech schraubverbunden und/oder schweißverbunden ist. Von Vorteil ist dabei, dass der Kanal in einfacher Weise gebildet ist.

**Erfindungsgemäß** weist jedes Seitenblech einen rechtwinklig abgebogenen Laschenbereich auf, wobei der Laschenbereich am Unterteil befestigt ist, insbesondere angeschraubt ist. Von Vorteil ist dabei, dass durch auflegen auf die fein bearbeitete Fläche des Unterteils eine einfache Verbindung ermöglicht ist.

Bei einer vorteilhaften Ausgestaltung weist das Zentralblech einen als Zylindermantelabschnitt fungierenden Abschnitt auf. Von Vorteil ist dabei, dass eine einfache Herstellung ermöglicht ist.

Erfindungsgemäss weist das Zentralblech eine Offnung auf, welche als Mündungsöffnung der Rohrleitung in den Kanal fungiert. Von Vorteil ist dabei, dass die Mündung im Zentralblech anordenbar ist und somit die Rohrleitung direkt in den Kanal mündet.

Bei einer vorteilhaften Ausgestaltung weist zur Begrenzung der Rohrleitung das Zentralblech zwei voneinander beabstandete, insbesondere parallel ausgerichtete, Rohrwandabschnitte auf,
wobei zur Begrenzung der Rohrleitung jedes der Seitenbleche jeweils einen seitlichen Rohrwandabschnitt aufweist, insbesondere wobei die Seitenbleche voneinander beabstandet sind,
insbesondere wobei zur Bildung der Rohrleitung jeder Rohrwandabschnitt mit jedem seitlichen Rohrwandabschnitt verbunden ist, insbesondere schweißverbunden und/oder schraubverbunden. Von Vorteil ist dabei, dass die Rohrleitung in einfacher Weise herstellbar ist.

Bei einer vorteilhaften Ausgestaltung weist die Rohrleitung einen rechteckförmigen Querschnitt auf. Von Vorteil ist dabei, dass als Begrenzung Stanz-Biegeteile verwendbar sind und die Herstellung hiermit einfach ausführbar ist.

Bei einer vorteilhaften Ausgestaltung ist der von dem Zentralblech überdeckte axiale Bereich größer als der von dem Zahnrad, insbesondere der von der Verzahnung des Zahnrades, überdeckte axiale Bereich,
insbesondere wobei die axiale Richtung parallel zur Drehachse des Zahnrades, insbesondere also parallel zur mit dem Zahnrad drehfest verbundenen abtreibenden Welle ausgerichtet ist. Von Vorteil ist dabei, dass das Ölführungsmittel das Zahnrad nicht berührt und somit keine direkten Reibungsverluste entstehen. Außerdem ist der Zwischenbereich zwischen Zahnrad und Ölführungsmittel mit Öl befüllt und somit gut geschmiert.

Bei einer vorteilhaften Ausgestaltung umfasst der vom jeweiligen Seitenblech überdeckte Radialabstandsbereich den von der Verzahnung des Zahnrades überdeckten Radialabstandsbereich,
wobei das Zentralblech vom Zahnrad beabstandet ist, insbesondere das gesamte Ölführungsmittel beabstandet ist vom Zahnrad,
insbesondere wobei der Radialabstand als Abstand zur Drehachse des Zahnrades definiert ist. Von Vorteil ist dabei, dass das Zahnrad im Bereich des Kanals sozusagen umrandet ist von dem Ölführungsmittel und das Öl zielgerichtet führbar ist.

Bei einer vorteilhaften Ausgestaltung weist das Unterteil eine fein bearbeitete Fläche auf, welche Bohrungen zur Schraubverbindung mit dem Ölführungsmittel aufweist und auf welche das Oberteil aufgesetzt ist,
insbesondere wobei die Fläche eben ausgeführt ist,
insbesondere wobei zwischen Unterteil und Oberteil eine Dichtung angeordnet ist. Von Vorteil ist dabei, dass die Fläche nur geringfügig größer auszuführen ist als die für die Verbindung des Oberteils mit dem Unterteil notwendig beanspruchte.

Bei einer vorteilhaften Ausgestaltung ist das Ölführungsmittel als Stanz-Biegeteil gefertigt. Von Vorteil ist dabei, dass die Herstellung des Ölzuführungsteils einfach und kostengünstig ausführbar ist.

Weitere Vorteile ergeben sich aus den Unteransprüchen.

Die Erfindung wird nun anhand von Abbildungen näher erläutert:

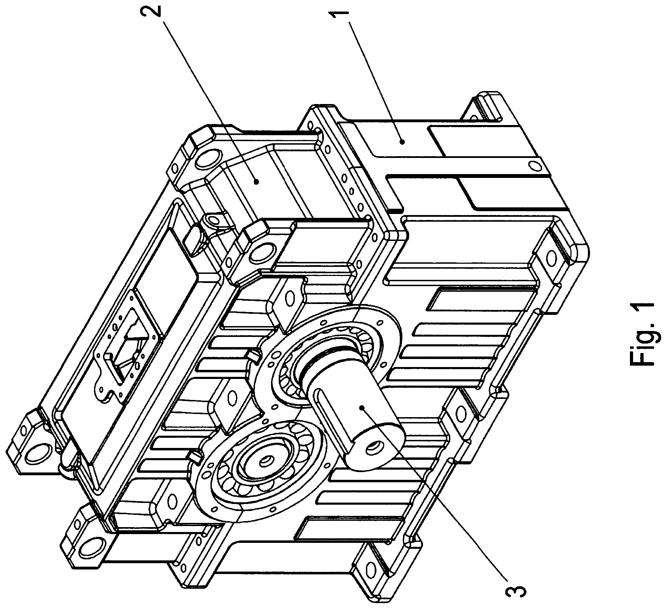

In der Figur 1 ist ein erfindungsgemäßes Getriebe in Schrägansicht gezeigt, dessen Gehäuse ein Unterteil 1 und ein darauf aufgesetztes Oberteil 2 aufweist.

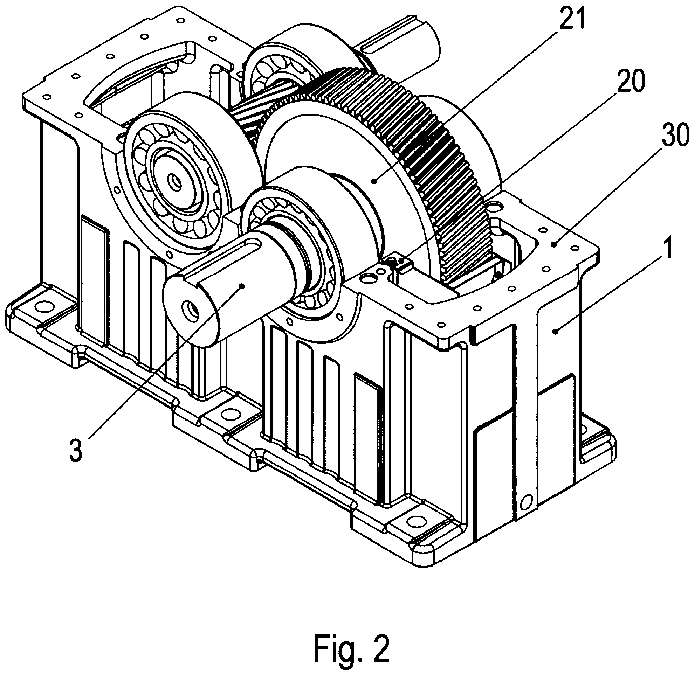

In der Figur 2 ist das Getriebe ohne Oberteil 2 dargestellt, wobei ein Ölführungsmittel 20 am mit der antreibenden Welle 3 drehfestverbundenen Zahnrad 21 gezeigt ist.

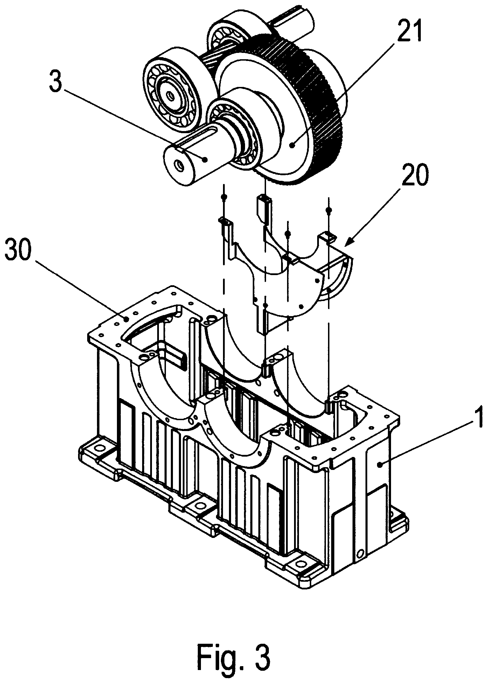

In der Figur 3 ist eine zur Figur 2 Explosions-Darstellung gezeigt, wobei das Zahnrad 21 samt Lager der abtreibenden Welle 3 und mit dem Zahnrad 21 in eingriff sich befindender Verzahnung sowie deren Lagerung und das Ölführungsmittel 20 einzeln sichtbar sind.

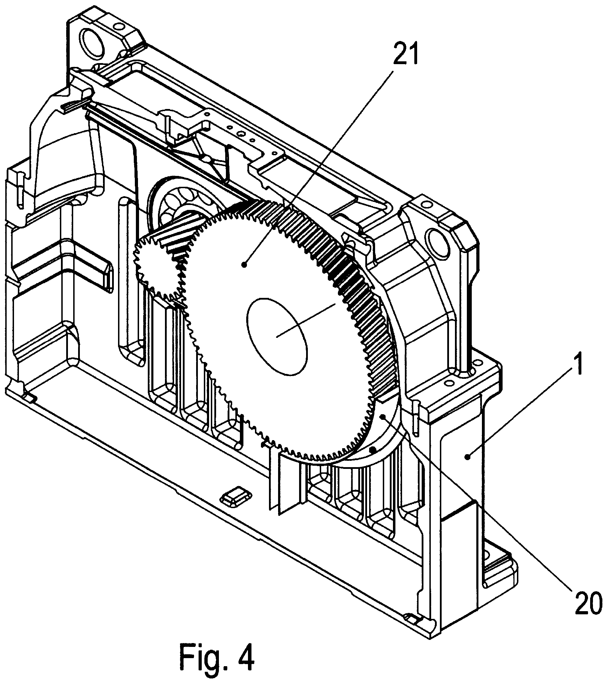

In der Figur 4 ist ein Querschnitt durch das Getriebe in Schrägansicht dargestellt.

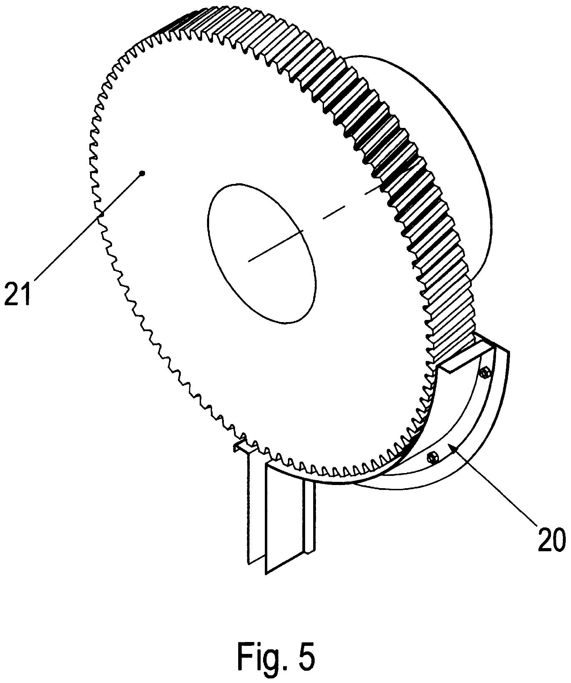

In der Figur 5 ist das Zahnrad 21 zusammen mit dem Ölführungsmittel 20 in Schrägansicht dargestellt.

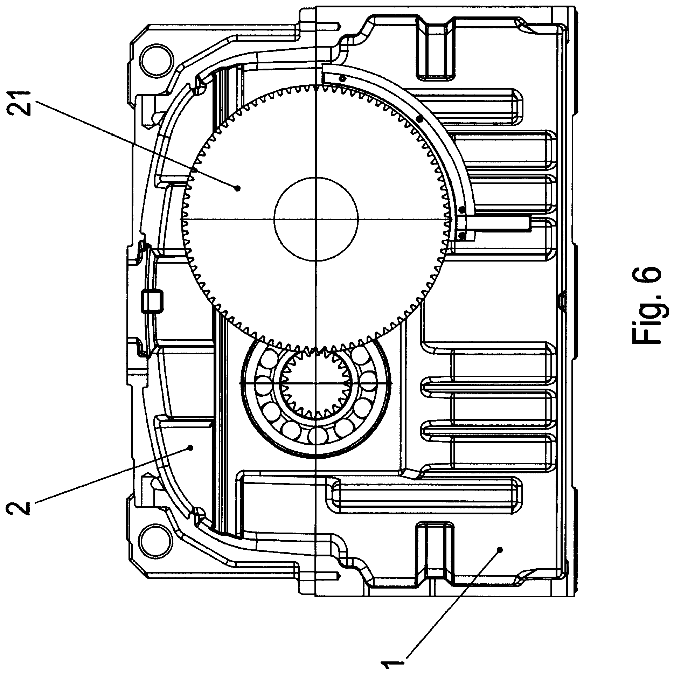

In der Figur 6 ist ein Querschnitt durch das Getriebe in Draufsicht dargestellt.

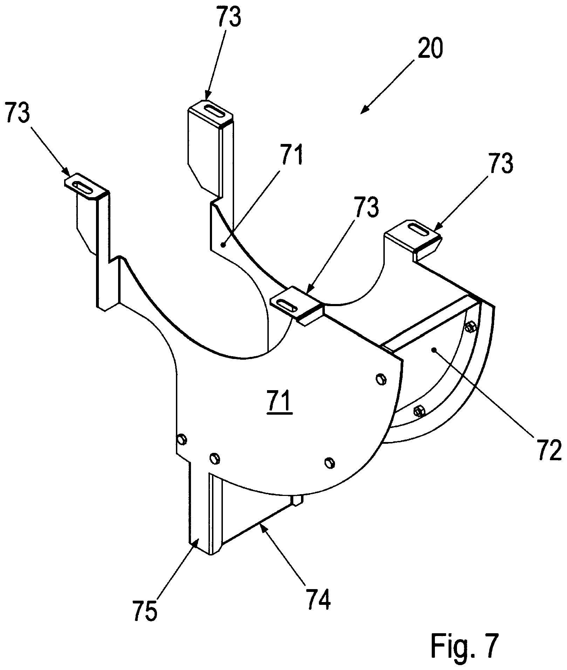

In der Figur 7 ist das Ölführungsmittel 20 in Schrägansicht näher dargestellt, wobei das Ölführungsmittel aus einem Zentralblech 72 und zwei Seitenblechen 71 zusammengesetzt ist.

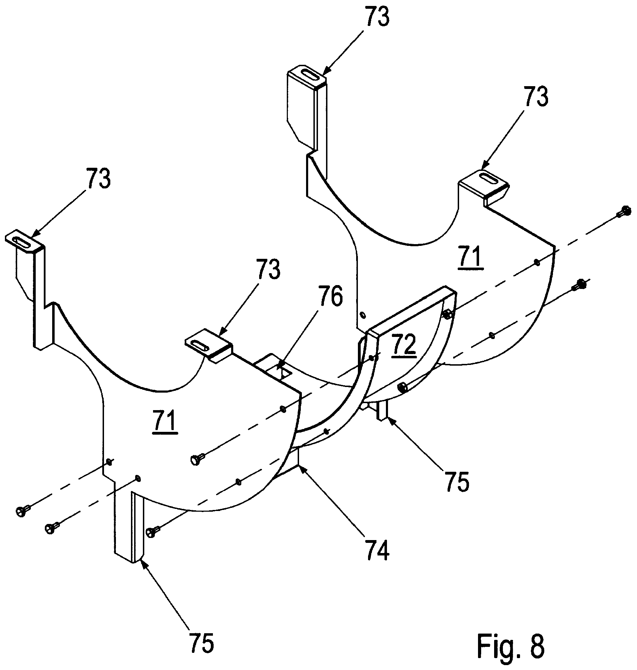

In der Figur 8 ist eine zur Figur 7 gehörige Explosions-Darstellung gezeigt.

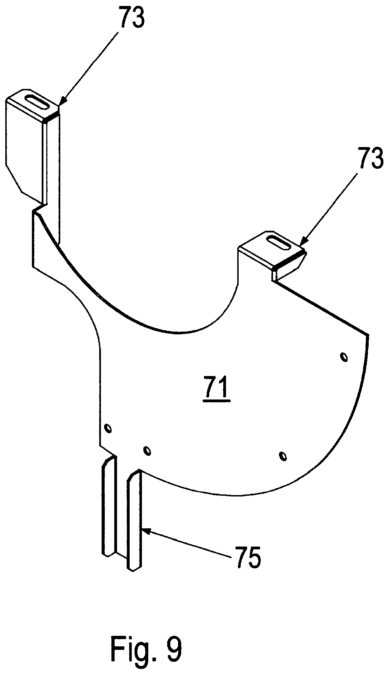

In der Figur 9 ist ein erstes der beiden Seitenbleche 71 in Schrägansicht näher dargestellt.

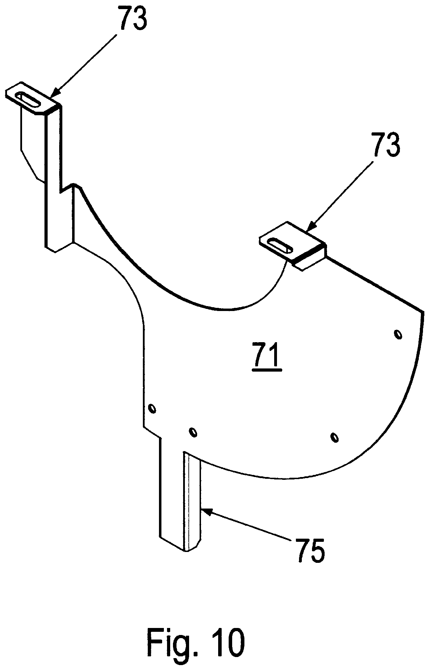

In der Figur 10 ist das andere der beiden Seitenbleche 71 in Schrägansicht näher dargestellt.

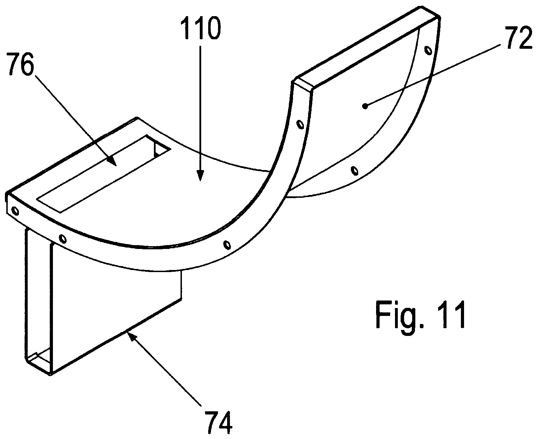

In der Figur 11 ist das Zentralblech 72 in Schrägansicht näher dargestellt.

Wie in den Figuren dargestellt, weist das Getriebe ein Oberteil 2 auf, das auf eine eben ausgeführte Flanschfläche 30 eines Unterteils 1 aufgesetzt ist. Dabei sind Oberteil 2 und Unterteil 1 vorzugsweise aus Stahlguss gefertigt.

Die Flanschfläche 30 ist eben ausgeführt und fein bearbeitet, so dass eine Dichtung, insbesondere Flachdichtung, zwischen Oberteil 2 und Unterteil 1 auf der Flanschfläche 30 anordenbar ist und somit Unterteil 1 und Oberteil 2 öldicht verbunden sind.

In der Flanschfläche 30 sind Bohrungen vorgesehen, insbesondere Gewindebohrungen, so dass Oberteil 2 und Unterteil 1 schraubverbindbar sind.

Das Ölführungsmittel 20 ist an einer nicht von dem Oberteil 2 abgedeckten, in der Flanschfläche 30 angeordneten Gewindebohrung schraubverbunden, wobei eine Schraube in diese Gewindebohrung eingeschraubt ist und der Schraubenkopf dabei einen Laschenabschnitt 73 des Ölführungsmittels 20 gegen das Unterteil 1 drückt.

Die Lageraufnahme für das die abtreibende Welle 3 lagernde Lager ist zweiteilig ausgeführt. Hierzu weist das Unterteil 1 eine halbkreisförmige Ausnehmung auf, die fein bearbeitet ist und in die das Lager der abtreibenden Welle 3 eingelegt ist. Das Oberteil weist eine entsprechend halbkreisförmige Ausnehmung auf, die ebenfalls fein bearbeitet ist und den nicht vom Unterteil 1 aufgenommenen Oberflächenabschnitt des Lagers aufnimmt.

Die abtreibende Welle ist mit dem Zahnrad 21 drehfest verbunden, insbesondere mittels Passfederverbindung.

Das Ölführungsmittel 20 ist schraubverbunden mit dem Unterteil 1 und bildet einen Ölführungskanal zwischen dem Zahnrad 21 und dem Ölführungsmittel 20 aus. Dabei ist das Ölführungsmittel 20 von der Verzahnung des Zahnrades 21 beabstandet und folgt etwa für 90°, also ein Viertel des Umfangs des Zahnrades 21. Somit ist ein Ölkanal aus dem Ölsumpf des Getriebes bis zu einer Umfangsstelle am Wälzkreis des Zahnrades mit vertikaler Tangente gebildet. Das geförderte Öl wird also im Wesentlichen vertikal herausgeschleudert aus dem Ölkanal. Auf diese Weise werden auch zu schmierende Stellen im Oberteil mit Öl beaufschlagt. Insbesondere ist aber auch ein Auffangen des nach oben geschleuderten Öls und Ableiten des aufgefangenen Öls zu einer zu schmierenden Stelle, wie Lager und/oder Eingriffsbereich zweier Verzahnungen, ausführbar.

Das Ölführungsmittel 20 weist hierzu eine vertikal gerichtete Rohrleitung zum Ansaugen von Öl aus dem Ölsumpf auf. Diese Rohrleitung führt Öl in den zwischen Zahnrad und Ölführungsmittel 20 ausgebildeten Ölführungskanal hinein. Da im Ölführungskanal das Öl schnell bewegt wird, ist ein geringerer Druck als im Ölsumpf vorhanden. Auf diese Weise wird das Öl aus dem Ölsumpf durch die Rohrleitung angesaugt in den Ölführungskanal und an dessen Ausgang im Wesentlichen vertikal herausgeschleudert.

Das Ölführungsmittel 20 ist aus einem Zentralblech 72 und zwei Seitenblechen 71 gebildet, wobei das Zentralblech 72 zwischen den Seitenblechen 71 angeordnet ist. Die Breite des Zentralblechs 72 ist geringfügig größer als die Breite des Zahnrades 21.

Die Rohrleitung ist durch zwei parallele Rohrwandabschnitte 74 des Zentralblechs 72 und durch zwei seitliche Rohrwandabschnitte 75 der Seitenbleche 71 begrenzt.

Das Zentralblech 72 weist also einen viertelkreisförmigen Abschnitt 110 auf, der einem Viertel eines Zylindermantels entspricht. Daher ist der Abschnitt 110 auch als Zylindermantelviertel 110 bezeichenbar. Im unteren Bereich des Abschnitts 110 ist eine Öffnung 76 ausgebildet, welche als Mündungsöffnung der Rohrleitung in den Ölführungskanal fungiert. Von dieser Öffnung am Zentralblech 72 erstrecken sich die beiden parallelen Rohrwandabschnitte 74 nach vertikal unten. In Achsrichtung ist der Beabstandungsbereich zwischen den beiden Rohrwandabschnitten 74 zur Bildung der Rohrleitung durch einen seitlichen Rohrwandabschnitt 75 des ersten Seitenblechs 71 verschlossen. Entgegen der Achsrichtung ist der Beabstandungsbereich zwischen den beiden Rohrwandabschnitten 74 zur Bildung der Rohrleitung durch einen seitlichen Rohrwandabschnitt 75 des anderen, zum ersten Seitenblech 71 spiegelverkehrt ausgebildeten Seitenblechs 71 verschlossen.

Jedes Seitenblech 71 weist an seiner Oberseite Laschenabschnitte 73 auf zur Verbindung mit dem Unterteil 1.

Der jeweilige seitliche Rohrwandabschnitt 75 ist an der Unterseite des jeweiligen Seitenblechs 71 ausgeformt.

Vorzugsweise sind die Seitenbleche 71 und das Zentralblech 72 jeweils als Stanz-Biegeteil aus Stahlblech gefertigt.

Die Seitenbleche 71 überdecken jeweils einen Radialabstandsbereich, insbesondere bezogen auf die Drehachse des Zahnrades 21, welche den von der Verzahnung und dem Ölführungskanal überdeckten Radialabstandsbereich überdeckt.

Die Seitenbleche 71 sind jeweils mit dem Zentralblech 72 schraubverbunden und/oder schweißverbunden.

### Bezugszeichenliste

1 Unterteil
2 Oberteil
3 Abtriebswelle
20 Ölführungsmittel
21 Zahnrad, insbesondere mit der Abtriebswelle 3 drehfest verbundenes Zahnrad
30 Verbindungsfläche
71 Seitenblech
72 Zentralblech
73 Laschenabschnitt
74 Rohrwandabschnitt
75 seitlicher Rohrwandabschnitt
76 Öffnung
110 Zylindermantelabschnitt, insbesondere Zylindermantelviertel

## Patentansprüche

1. Getriebe mit aus einem Unterteil (1) und einem Oberteil (2) gebildeten, teilweise mit Öl befüllten Gehäuse und mit einem Zahnrad (21),
**wobei** ein Ölführungsmittel (20) am Unterteil (1) befestigt ist,
wobei zwischen dem Zahnrad (21) und dem Ölführungsmittel (20) ein Kanal angeordnet ist, in welchen eine Rohrleitung mündet,
wobei der Kanal vom Ölführungsmittel (20) und vom Zahnrad (21) begrenzt ist,
wobei das Ölführungsmittel (20) die Rohrleitung bildet und/oder aufweist, wobei die Rohrleitung vom Ölsumpf des Getriebes zum Kanal führt,
wobei der Ölpegel sich innerhalb des Unterteils (1) befindet, also der Ölsumpf im Unterteil (1) angeordnet ist,
wobei das Ölführungsmittel (20) ein Zentralblech (72) aufweist, das zwischen zwei Seitenblechen (71) des Ölführungsmittels (20) angeordnet ist,
wobei der Kanal durch das Zahnrad (21), das Zentralblech (72) und die beiden Seitenbleche (71 begrenzt ist, **dadurch gekennzeichnet, dass** das Zentralblech (72) einen viertelkreisförmigen Abschnitt (110) aufweist, der einem Viertel (110) eines Zylindermantels entspricht, wobei in einem unteren Bereich des Abschnitts (110) eine Öffnung (76) ausgebildet ist, welche als Mündungsöffnung der Rohrleitung in den Kanal fungiert,
wobei der Kanal, also Ölkanal, aus dem Ölsumpf des Getriebes bis zu einer Umfangsstelle am Wälzkreis des Zahnrades mit vertikaler Tangente gebildet ist,
wobei ein Mittel zum Sammeln von aus dem Kanal ausgetretenem Öl das gesammelte Öl Schmierstellen, nämlich Lagern und/oder mindestens einem Verzahnungseingriffsbereich, zuleitet,
wobei jedes Seitenblech (71) einen rechtwinklig abgebogenen Laschenbereich aufweist,
wobei der Laschenbereich am Unterteil (1) befestigt ist ist.

2. Getriebe nach Anspruch 1,
**dadurch gekennzeichnet, dass**
die Rohrleitung vertikal ausgerichtet ist,
wobei durch den Kanal gefördertes Öl vertikal aus dem Kanal austritt, so dass das Oberteil (2) mit Öl beaufschlagt wird.

3. Getriebe nach mindestens einem der vorangegangenen Ansprüche,
**dadurch gekennzeichnet, dass**
das Zentralblech (72) mit dem jeweiligen Seitenblech (71) schraubverbunden und/oder schweißverbunden ist.

4. Getriebe nach mindestens einem der vorangegangenen Ansprüche,
**dadurch gekennzeichnet, dass**
zur Begrenzung der Rohrleitung das Zentralblech (72) zwei voneinander beabstandete parallel ausgerichtete Rohrwandabschnitte (74, 75) aufweist,
wobei zur Begrenzung der Rohrleitung jedes der Seitenbleche (71) jeweils einen seitlichen Rohrwandabschnitt (75) aufweist, wobei die Seitenbleche (71) voneinander beabstandet sind,
wobei zur Bildung der Rohrleitung jeder Rohrwandabschnitt (74, 75) mit jedem seitlichen Rohrwandabschnitt (74, 75) verbunden ist, nämlich schweißverbunden und/oder schraubverbunden.

5. Getriebe nach mindestens einem der vorangegangenen Ansprüche,
**dadurch gekennzeichnet, dass**
die Rohrleitung einen rechteckförmigen Querschnitt aufweist.

6. Getriebe nach mindestens einem der vorangegangenen Ansprüche,
**dadurch gekennzeichnet, dass**
der von dem Zentralblech (72) überdeckte axiale Bereich größer ist als der von der Verzahnung des Zahnrades (21) ), überdeckte axiale Bereich, wobei die axiale Richtung parallel zur Drehachse des Zahnrades (21) also parallel zur mit dem Zahnrad (21) drehfest verbundenen abtreibenden Welle ausgerichtet ist.

7. Getriebe nach mindestens einem der vorangegangenen Ansprüche,
**dadurch gekennzeichnet, dass**
der vom jeweiligen Seitenblech (71) überdeckte Radialabstandsbereich den von der Verzahnung des Zahnrades (21) überdeckten Radialabstandsbereich umfasst,
wobei das Zentralblech (72) vom Zahnrad (21) beabstandet ist und das gesamte Ölführungsmittel (20) vom Zahnrad (21 beabstandet ist, wobei der Radialabstand als Abstand zur Drehachse des Zahnrades (21) definiert ist.

8. Getriebe nach mindestens einem der vorangegangenen Ansprüche,
**dadurch gekennzeichnet, dass**
das Unterteil (1) eine fein bearbeitete Fläche aufweist, welche Bohrungen zur Schraubverbindung mit dem Ölführungsmittel (20) aufweist und auf welche das Oberteil (2) aufgesetzt ist,
wobei die Fläche eben ausgeführt ist,
wobei zwischen Unterteil (1) und Oberteil (2) eine Dichtung angeordnet ist.

9. Getriebe nach mindestens einem der vorangegangenen Ansprüche,
**dadurch gekennzeichnet, dass**
das Ölführungsmittel (20) als Stanz-Biegeteil gefertigt ist.

## Claims

1. A transmission with a housing formed from a lower part (1) and an upper part (2), and partly filled with oil, and with a gear wheel (21),
wherein an oil guidance means (20) is fastened to the lower part (1),
wherein a channel is arranged between the gear wheel (21) and the oil guidance means (20), into which channel a pipe opens,
wherein the channel is limited by the oil guidance means (20) and the gear wheel (21), wherein the oil guidance means (20) forms and/or contains the pipe,
wherein the pipe leads from the oil sump of the transmission to the channel,
wherein the oil level is located within the lower part (1), therefore the oil sump is arranged in the lower part (1),
wherein the oil guidance means (20) has a central metal plate (72) which is arranged between two metal side plates (71) of the oil guidance means (20),
wherein the channel is limited by the gear wheel (21), the central metal plate (72) and the two metal side plates (71),
**characterised in that** the central metal plate (72) has a quadrant-shaped portion (110) which corresponds to a quarter (110) of a cylinder casing, with an opening (76) being formed in a lower region of the portion (110), which opening acts as a mouth opening of the pipe into the channel,
with the channel, i.e. oil duct, being formed from the oil sump of the transmission up to a peripheral point on the rolling circle of the gear wheel with a vertical tangent,
with a means for collecting oil which has emerged from the channel conducting the collected oil to lubrication points, namely bearings and/or at least one toothing meshing region,
with each side plate (71) having a tab region bent over at right-angles,
wherein the tab region is fastened to the lower part (1).

2. A transmission according to Claim 1,
**characterised in that**
the pipe is vertically oriented,
with oil conveyed through the channel emerging vertically from the channel, so that the upper part (2) is supplied with oil.

3. A transmission according to at least one of the preceding claims,
**characterised in that**
the central metal plate (72) is screw-connected and/or connected by welding to the respective side plate (71).

4. A transmission according to at least one of the preceding claims,
**characterised in that**
to delimit the pipe the central metal plate (72) has two tubular wall portions (74, 75) oriented in parallel and spaced apart from each other,
with, to delimit the pipe, each of the metal side plates (71) having in each case a lateral tubular wall portion (75), with the metal side plates (71) being spaced apart from each other,
with, to form the pipe, each tubular wall portion (74, 75) being connected, namely connected by welding and/or screw-connected, to each lateral tubular wall portion (74, 75).

5. A transmission according to at least one of the preceding claims,
**characterised in that**
the pipe has a rectangular cross-section.

6. A transmission according to at least one of the preceding claims,
**characterised in that**
the axial region covered by the central metal plate (72) is larger than the axial region covered by the gearing of the gear wheel (21),
with the axial direction being oriented parallel to the axis of rotation of the gear wheel (21),
i.e. parallel to the output shaft connected non-rotatably to the gear wheel (21).

7. A transmission according to at least one of the preceding claims,
**characterised in that**
the radial distance region covered by the respective side plate (71) comprises the radial distance region covered by the gearing of the gear wheel (21),
with the central metal plate (72) being spaced apart from the gear wheel (21) and the entire oil guidance means (20) being spaced apart from the gear wheel (21),
with the radial distance being defined as the distance from the axis of rotation of the gear wheel (21).

8. A transmission according to at least one of the preceding claims,
**characterised in that**
the lower part (1) has a fine-machined face which has bores for screw connection to the oil guidance means (20), and onto which the upper part (2) is placed,
with the face being made flat,
with a seal being arranged between the lower part (1) and upper part (2).

9. A transmission according to at least one of the preceding claims,
**characterised in that**
the oil guidance means (20) is manufactured as a stamped and bent part.

## Revendications

1. Transmission comprenant un carter partiellement empli d'huile, constitué d'une partie inférieure (1) et d'une partie supérieure (2), et une roue dentée (21),
un moyen (20) de guidage d'huile étant fixé à ladite partie inférieure (1),
un canal, dans lequel débouche un conduit tubulaire, étant interposé entre la roue dentée (21) et le moyen (20) de guidage de l'huile,
lequel canal est délimité par ledit moyen (20) de guidage de l'huile et par ladite roue dentée (21),
ledit moyen (20) de guidage de l'huile formant le conduit tubulaire, et/ou étant muni de ce dernier,
ledit conduit tubulaire menant audit canal à partir du bac à huile de la transmission, sachant que le niveau d'huile se trouve à l'intérieur de la partie inférieure (1), c'est-à-dire que le bac à huile est logé dans ladite partie inférieure (1),
le moyen (20) de guidage de l'huile étant pourvu d'une tôle centrale (72) interposée entre deux tôles latérales (71) dudit moyen (20) de guidage de l'huile,
le canal étant délimité par la roue dentée (21), par la tôle centrale (72) et par les deux tôles latérales (71),
**caractérisée par le fait que**
la tôle centrale (72) comporte une zone (110) en forme de quart de cercle qui correspond à un quart (110) d'une enveloppe cylindrique, sachant qu'un orifice (76), pratiqué dans une région inférieure de ladite zone (110), remplit la fonction d'un orifice d'embouchure du conduit tubulaire dans le canal,
lequel canal, c'est-à-dire le canal de circulation d'huile, est formé à partir du bac à huile de la transmission jusqu'à une zone périphérique sur le cercle de roulement de la roue dentée, avec tangente verticale,
sachant qu'un moyen, dévolu à la collecte d'huile sortie dudit canal, dirige l'huile collectée vers des zones de lubrification, à savoir des paliers et/ou au moins une région d'engrènement de dentures,
chaque tôle latérale (71) étant dotée d'une région formant patte coudée à angle droit, laquelle région, formant patte, est fixée à la partie inférieure (1).

2. Transmission selon la revendication 1,
**caractérisée par le fait que**
le conduit tubulaire est orienté verticalement,
sachant que de l'huile acheminée par le canal sort verticalement dudit canal, de telle sorte que la partie supérieure (2) soit sollicitée par de l'huile.

3. Transmission selon au moins l'une des revendications précédentes,
**caractérisée par le fait que**
la tôle centrale (72) est reliée, par vissage et/ou par soudage, à la tôle latérale (71) considérée.

4. Transmission selon au moins l'une des revendications précédentes,
**caractérisée par le fait que**,
pour délimiter le conduit tubulaire, la tôle centrale (72) est pourvue de deux zones de paroi tubulaire (74, 75) espacées l'une de l'autre et orientées parallèlement,
sachant que, pour délimiter ledit conduit tubulaire, chacune des tôles latérales (71) est respectivement munie d'une zone latérale de paroi tubulaire (75), lesdites tôles latérales (71) étant espacées l'une de l'autre,
sachant que, pour former ledit conduit tubulaire, chaque zone de paroi tubulaire (74, 75) est reliée à chaque zone latérale de paroi tubulaire (74, 75), plus précisément par soudage et/ou par vissage.

5. Transmission selon au moins l'une des revendications précédentes,
**caractérisée par le fait que**
le conduit tubulaire présente une section transversale rectangulaire.

6. Transmission selon au moins l'une des revendications précédentes,
**caractérisée par le fait que**
la région axiale couverte par la tôle centrale (72) est plus grande que la région axiale couverte par la denture de la roue dentée (21),
sachant que la direction axiale est orientée parallèlement à l'axe de rotation de la roue dentée (21), c'est-à-dire parallèlement à l'arbre de sortie relié à ladite roue dentée (21) avec verrouillage rotatif.

7. Transmission selon au moins l'une des revendications précédentes,
**caractérisée par le fait que**
la région d'espacement radial, couverte par la tôle latérale (71) considérée, englobe la région d'espacement radial couverte par la denture de la roue dentée (21),
la tôle centrale (72) étant espacée de la roue dentée (21), et le moyen (20) de guidage de l'huile étant intégralement espacé de ladite roue dentée (21),
l'espacement radial étant défini en tant que distance par rapport à l'axe de rotation de ladite roue dentée (21).

8. Transmission selon au moins l'une des revendications précédentes,
**caractérisée par le fait que**
la partie inférieure (1) présente une surface à usinage fin qui est munie de perçages dédiés à la liaison vissée avec le moyen (20) de guidage de l'huile, et sur laquelle la partie supérieure (2) est mise en place,
ladite surface étant de réalisation plane,
une garniture d'étanchement étant interposée entre ladite partie inférieure (1) et ladite partie supérieure (2).

9. Transmission selon au moins l'une des revendications précédentes,
**caractérisée par le fait que**
le moyen (20) de guidage de l'huile est fabriqué en tant que pièce venue d'estampage et de pliage.
